# EUROPÄISCHE PATENTSCHRIFT

(11) **EP 1 118 046 B1**
(45) Veröffentlichungstag und Bekanntmachung des Hinweises auf die Patenterteilung: **27.11.2002**
(21) Anmeldenummer: 99955850.5
(22) Anmeldetag: 04.10.1999
(51) Int. Cl.: G05B 19/05

(54) **PROZESSSTEUERUNG**
PROCESS CONTROL
COMMANDE DE PROCESSUS

(30) Priorität: 06.10.1998 DE 19845876
(43) Veröffentlichungstag der Anmeldung: 25.07.2001
(73) Patentinhaber: Jetter AG, 71642 Ludwigsburg (DE)
(72) Erfinder: BÖHRINGER, Harald, D-70736 Fellbach (DE); KAISER, Stefan, D-71254 Ditzingen (DE); KRAUT, Andreas, D-71642 Ludwigsburg (DE); NEHR, Walter, D-70195 Stuttgart (DE); SCHWIPS, Steffen, D-71737 Kirchberg an der Murr (DE)
(74) Vertreter: Patentanwalts-Partnerschaft, Rotermund + Pfusch + Bernhard
(86) Internationale Anmeldenummer: EP9907345
(87) Internationale Veröffentlichungsnummer: WO00020935

(56) Entgegenhaltungen:
- WO-A-96/29635
- US-A- 5 544 163
- US-A- 5 781 530
- US-A- 5 790 786
- PATENT ABSTRACTS OF JAPAN vol. 7, no. 192 (P-218) [1337], 23. August 1983 (1983-08-23) & JP 58 092006 A (TOKYO SHIBAURA DENKI K.K.), 1. Juni 1983 (1983-06-01)

## Beschreibung

Die Erfindung betrifft ein Netzwerk zur Datenübertragung mit über Schaltnaben und/oder Busse miteinander zum Datenaustausch verketteten Modulen, wobei die Schaltnaben mit jeweils mehreren Anschlüssen sowie zugeordneter bzw. integrierter Speicheranordnung versehen sind und jede Schaltnabe ihre Anschlüsse jeweils paarweise unter Abtrennung von allen übrigen Anschlüssen verbindet und/oder über die Anschlüsse zugeleitete Datenpakete separiert zwischenspeichert und dem jeweils adressierten Anschluß nur dann zuleitet, wenn dieser für Datenempfang frei bzw. freischaltbar ist, und wobei die Busse durch Sendeberechtigungssteuerung überwachte Zugangssteuereinheiten verketten, über die der jeweilige Bus Daten von den Modulen erhält.

Derartige Netzwerke mit Schaltnaben sind auf dem Gebiet der Kommunikationsnetze grundsätzlich bekannt, vgl. beispielsweise die US-Patentschriften 5 544 163 und 5 781 530.

Die US-Patentschrift 5 790 786 zeigt ein für Kommunikationsnetze vorgesehenes Bussystem, dessen Bus eine Vielzahl von Zugangssteuereinheiten verknüpft. Insbesondere zeigt Fig. 1A der vorgenannten Druckschrift, daß mehrere Datenmodule miteinander über ein Bussystem verbunden sind, welches von einer Sendeberechtigungssteuerung (Ethernet hub) überwachte Zugangssteuereinheiten (Ethernet adapter cards), über die der Bus des Bussystems Daten von den Datenmodulen erhält, miteinander verkettet.

Diese Technik hat noch keinen Eingang bei der Steuerung industrieller Prozesse gefunden.

Vielmehr sind bei herkömmlichen Prozeßsteuerungen die Module der Steuerung über einen Bus miteinander verknüpft, wobei vorgesehen ist, daß die einzelnen Module die von ihnen ermittelten, anderen Modulen zuzuleitenden Daten zu beliebigen, ohne Gesetzmäßigkeit bestimmten Zeitpunkten absetzen. Der Datenaustausch kann allerdings nur dann funktionieren, wenn auf dem Bus jeweils nur die Daten eines einzigen Moduls übertragen werden. Falls zwei oder mehrere Module ihre Daten gleichzeitig absetzen, beendigt jedes dieser Module sofort seine Datensendung und wiederholt die jeweilige Datensendung nach einer durch Zufallsgenerierung bestimmten Zeitspanne. Auf diese Weise kann nach Wahrscheinlichkeit in der Regel verhindert werden, daß die vorgenannten Module erneut gleichzeitig zu senden suchen. Im übrigen ist bei herkömmlichen Prozeßsteuerungen vorgesehen, daß ein Modul nur dann zu senden beginnt, wenn der Bus frei ist, d.h. keine Datensendung eines anderen Moduls erkennbar ist. Auf diese Weise wird gewährleistet, daß eine von einem Datenmodul initiierte Datensendung während der Sendung nicht dadurch gestört werden kann, daß ein weiteres Modul zu senden beginnt. Bei umfangreichen Prozeßsteuerungen treten kollidierende Datensendungen vergleichsweise häufig auf, mit der Folge, daß der Datenaustausch erheblich verzögert werden kann und eine optimale Steuerung des jeweiligen Prozesses nicht mehr bzw. nicht mehr mit der gewünschten Schnelligkeit möglich wird.

Deshalb ist es Aufgabe der Erfindung, ein zur Steuerung von industriellen Prozessen geeignetes Netzwerk zu schaffen, welches einen bezüglich des Zeitbedarfes sowie der Sicherheit gut reproduzierbaren Datenaustausch ermöglicht.

Diese Aufgabe wird erfindungsgemäß dadurch gelöst, daß bei einer Prozeßsteuerung mit mehreren miteinander verketteten, jeweils eine Zentralprozessoreinheit sowie Slave-Prozessoren umfassenden speicherprogrammierbaren Steuereinheiten jeder speicherprogrammierbaren Steuereinheit eine Schaltnabe bzw. ein Bus der vorgenannten Art mit gesonderten Anschlüssen für die Slave-Prozessoren und die Zentralprozessoreinheit der jeweiligen speicherprogrammierbaren Steuereinheit zugeordnet ist und jeder Slave-Prozessor unter Umgehung seiner zugeordneten Zentralprozessoreinheit Daten mit beliebigen Modulen der gesamten Prozeßsteuerung austauschen kann.

Die als "Ethernet-Switches" auf dem Markt erhältlichen Schaltnaben besitzen für jeden Anschluß einen kompletten eigenen Sender und Empfänger, so daß jeder Anschluß ständig für die Sendung oder den Empfang von Daten zur Verfügung steht und dem Anschluß zugehende Daten ständig gespeichert oder, falls ein anderer Anschluß frei ist, diesem anderen Anschluß zugeleitet werden können.

Die Sendesteuerung der Busse kann die Zugangssteuereinheiten (MAC, Media-Access Controller) zyklisch bzw. nach vorgebbarer Priorität exklusiv sendeberechtigt schalten.

Die Erfindung beruht auf dem allgemeinen Gedanken, durch eine besondere physikalische Struktur der Prozeßsteuerung und/oder durch Steuerung des Datenaustausches kollidierende Datenübermittlungen in einer Datenleitung zu verhindern. Damit wird erreicht, daß keine unberechenbaren Verzögerungszeiten beim Zugriff auf einen Bus bzw. eine Datenleitung auftreten können und der Zeitbedarf eines Datenaustausches genau bzw. in sehr engen Grenzen berechenbar wird.

Jede Schaltnabe und jeder Bus mit Sendesteuerung bieten in prinzipiell gleicher Weise die Möglichkeit, den Zentralprozessor einer speicherprogrammierbaren Steuereinheit mit zugeordneten Slave-Prozessoren bzw. Slave-Einheiten zu verknüpfen, und zwar derart, daß die Slave-Prozessoren bzw. Slave-Einheiten gegebenenfalls unter Umgehung des Zentralprozessors Daten mit beliebigen Modulen der Prozeßsteuerung austauschen können.

Dadurch wird einerseits eine wesentliche Entlastung der Zentralprozessoren ermöglicht. Andererseits kann der notwendige Datenaustausch erheblich beschleunigt werden. Des weiteren kann der jeweilige Zentralprozessor die ihm obliegenden Aufgaben schneller abarbeiten, ohne durch Datenaustausch zwischen einem ihm zugeordneten Slave-Prozessor od.dgl. und anderen Teilen der Prozeßsteuerung "gestört" zu werden.

Die miteinander verketteten Schaltnaben unterteilen die durch sie gebildete Datenübertragungskette in eine Vielzahl von Sektionen, die einerseits für voneinander unabhängige, simultan durchgeführte Datensendungen zur Verfügung stehen und andererseits bei entsprechender Schaltung der Schaltnaben eine einzige durchgehende Datenübertragungslinie bilden können.

Ein besonderer Vorzug der Schaltnaben besteht darin, daß die Möglichkeit geboten wird, prinzipiell an jeder Schaltnabe einen Anschluß als Programmiereingang zu schalten. Dies bietet einerseits den Vorzug einer dezentralisierten Programmierung. Andererseits ist vorteilhaft, daß bei Programmierung von an die jeweilige Schaltnabe angeschlossenen Modulen das die Schaltnaben verkettende Leitungssystem nicht belastet werden muß. Vielmehr kann der als Programmiereingang geschaltete Anschluß einer Schaltnabe intern über die Schaltnabe mit deren anderen Anschlüssen und damit den dort angekoppelten Modulen kommunizieren.

Der Bus bzw. die Busse mit Sendesteuerung sind vorzugsweise für Teilsysteme der Prozeßsteuerung vorgesehen und jeweils einem Anschluß einer Schaltnabe zugeordnet.

Dadurch wird der Vorteil erzielt, daß die Schaltnabe bzw. das Schaltnabensystem mit vergleichsweise wenig Anschlüssen konzipiert werden können, weil der vorgenannte Bus den ihm zugeordneten Schaltnabenanschluß entsprechend den zur Verfügung stehenden freien Zugangssteuereinheiten des jeweiligen Busses "vervielfacht".

Ein solches Bus-System mit Sendesteuerung besitzt zwar regelmäßig eine geringere Leistungskapazität als ein Schaltnabensystem, weil jeder Bus eine nicht in Untersegmente unterteilbare Einheit bildet und jeweils nur für eine Datensendung zu oder von einem an den Bus angekoppelten Modul zur Verfügung steht. Jedoch ist ein solches Bussystem für Untersysteme oftmals vollauf ausreichend, insbesondere für solche Systeme, die nur einen vergleichsweise geringen Kommunikationsbedarf mit anderen Untersystemen der Prozeßsteuerung aufweisen und dementsprechend das Schaltnabensystem beim Betrieb der Prozeßsteuerung nur wenig belasten.

Bei der Kombination des Schaltnabensystems mit durch Sendesteuerung überwachte Bus-Systemen wird in vorteilhafter Weise der Tatsache Rechnung getragen, daß eine Prozeßsteuerung oftmals räumlich weit voneinander entfernte Teilsysteme, die ihrerseits aus räumlich vergleichsweise eng benachbarten Modulen bestehen, vernetzen muß. Die räumlich eng benachbarten Module können dann durch die vergleichsweise preisgünstigen Bus-Systeme in herkömmlicher Leitungstechnik miteinander verkettet werden, während die Schaltnaben miteinander über Lichtwellenleiter oder sonstige Leitungssysteme kommunizieren, die für Datenübertragung über große Entfernungen konzipiert und entsprechend kostenaufwendiger sind.

Im übrigen wird hinsichtlich bevorzugter Merkmale der Erfindung auf die Ansprüche sowie die nachfolgende Erläuterung der Zeichnung verwiesen, anhand der bevorzugte Ausführungsvarianten der Erfindung näher beschrieben werden.

Dabei zeigt
- Fig. 1: eine schematisierte Darstellung einer Schaltnabenkette und
- Fig. 2: eine schematisierte Darstellung eines Bus-Systems mit Sendesteuerung.

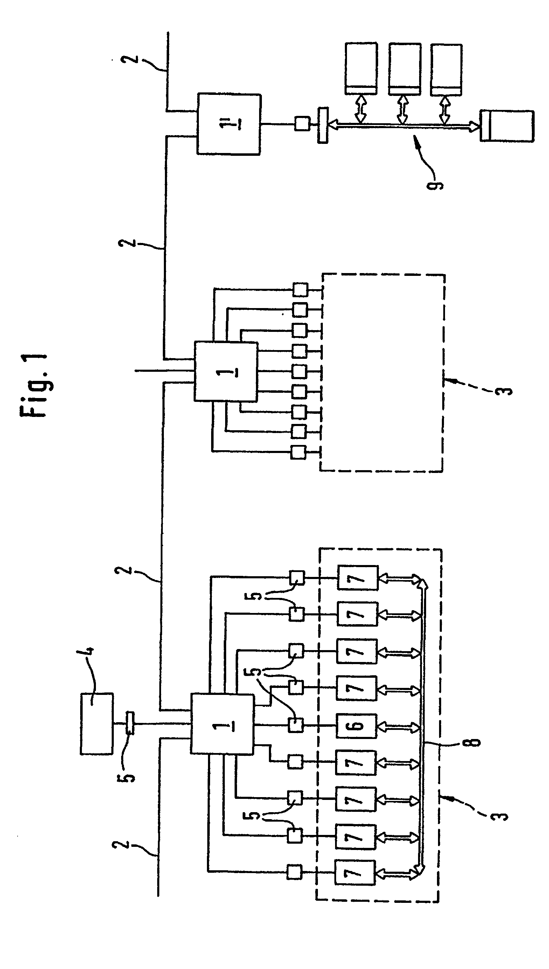

Gemäß Fig. 1 sind eine Vielzahl von Schaltnaben 1 miteinander, beispielsweise über Lichtleiterkabel 2, verkettet. Diese Schaltnaben 1 besitzen eine Vielzahl von Anschlüssen, die einerseits für die zur Verkettung der Schaltnaben dienenden Lichtleiterkabel 2 und andererseits für die Module einer speicherprogrammierbaren Steuerung 3 und/oder für eine Programmiervorrichtung 4 dienen.

Soweit die Schaltnaben 1 für andere Signalarten, im vorliegenden Beispiel optische Signale, vorgesehen sind als die an die Anschlüsse der Schaltnaben 1 anzukoppelnden Einheiten, die beispielsweise zur Verarbeitung elektrischer Signale vorgesehen sein können, sind entsprechende Schnittstellen bzw. Interface-Module 5 angeordnet bzw. in die Schaltnaben 1 oder die angeschlossenen Module 6 und 7 integriert.

Die Schaltnaben 1 können an ihren Anschlüssen eingehende Daten separiert speichern und über einen anderen Anschluß, der zu dem für die vorgenannten Daten gewünschten Empfänger führt, weiterleiten, wobei diese Weiterleitung nur bzw. erst dann erfolgt, wenn der vorgenannte andere Anschluß frei ist.

Die Speicherung der über einen Anschluß eingehenden Daten kann gegebenenfalls unterbleiben, wenn der andere Anschluß, über den diese Daten weitergeleitet werden müssen, bereits bei Eingang der vorgenannten Daten frei ist. Grundsätzlich kann aber auch in einem solchen Falle eine Zwischenspeicherung der Daten vorgesehen sein, wobei die Eingabe der Daten in den Speicher und die Sendung der Daten aus dem Speicher praktisch simultan erfolgen können und durch den Speicher eine "virtuelle" Direktverbindung zwischen zwei Anschlüssen der Schaltnabe geschaffen wird.

Die speicherprogrammierbare Steuerung 3 umfaßt in grundsätzlich bekannter Weise eine Zentralprozessoreinheit 6 (CPU) sowie mehrere Slave-Prozessoren 7.

Eine Besonderheit der Erfindung liegt nun darin, daß sowohl die Prozessoreinheit 6 als auch die Slave-Prozessoren 7 jeweils gesonderten Anschlüssen der der jeweiligen speicherprogrammierbaren Steuerung 3 zugeordneten Schaltnabe 1 zugeordnet sind. Auf diese Weise wird die Möglichkeit geschaffen, daß jeder Slave-Prozessor 7 (oder ein sonstiges Datenmodul der speicherprogrammierbaren Steuerung 3) unter Umgehung der zugeordneten Zentralprozessoreinheit 6 über die zugeordnete Schaltnabe 1 mit prinzipiell beliebigen Datenmodulen der gesamten Prozeßsteuerung kommunizieren kann.

Gegebenenfalls kann die speicherprogrammierbare Steuereinheit zusätzlich einen Bus 8 aufweisen, über den die Zentralprozessoreinheit 6 sowie die Slave-Prozessoren 7 unter Umgehung der zugeordneten Schaltnabe 1 miteinander kommunizieren können.

Wie weiter unten dargestellt wird, kann durch eine Sendesteuerung eine Kollision von Datenübertragungen auf dem Bus 8 vermieden werden.

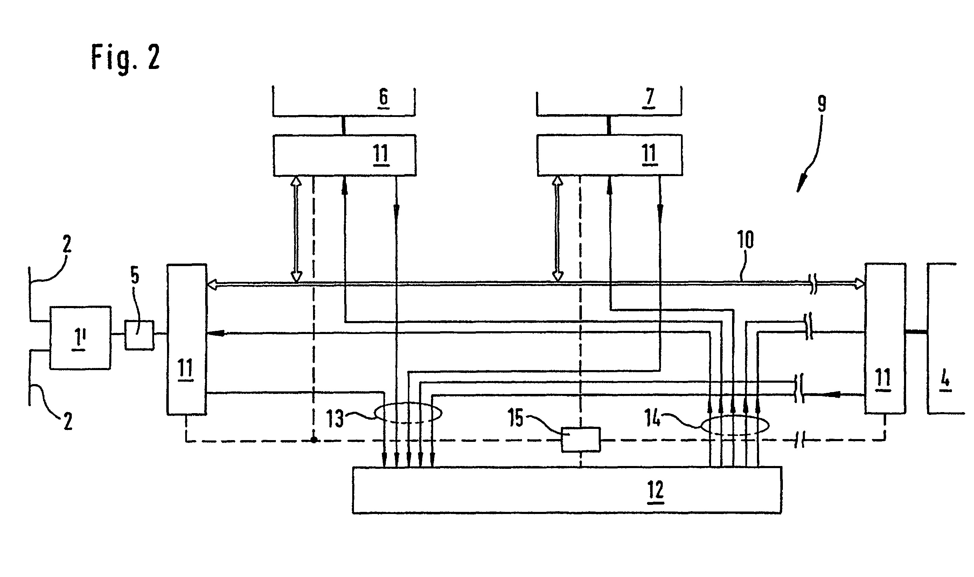

Im Beispiel der Fig. 1 besitzt eine Schaltnabe 1' nur vergleichsweise wenige Anschlüsse, im dargestellten Beispiel drei Anschlüsse, von denen zwei Anschlüsse wiederum für Lichtleiterkabel 2 zur Vernetzung mit anderen Schaltnaben 1 bzw. 1' vorgesehen sind, während ein Anschluß einem Bus-System 9 zugeordnet ist, welches nachfolgend anhand der Fig. 2 erläutert wird.

Das Bus-System 9 der Fig. 2 besitzt einen Bus 10, der eine Vielzahl von Zugangssteuereinheiten 11, auch als MACs, d.h. Media Access Controllers bezeichnet, miteinander verknüpft. Dabei dient die in Fig. 2 linke Zugangssteuereinheit 11 zum Anschluß an die zugeordnete Schaltnabe 1', wobei bei Bedarf zwischen dieser Zugangssteuereinheit 11 und der Schaltnabe 1' die Schnittstelleneinheit 5 vorgesehen kann, um die Signale des Schaltnabensystems in die Signale des Bus-Systems 9 umsetzen zu können und umgekehrt.

Die übrigen Zugangssteuereinheiten 11 verbinden den Bus 10 mit der Zentralprozessoreinheit 6 sowie dem Slave-Prozessoren 7 und/oder der Programmiervorrichtung 4.

Den Zugangssteuereinheiten 11 ist eine gemeinsame Sendeberechtigungssteuerung 12 zugeordnet. Diese erhält einerseits über eingangsseitige Steuerleitungen 13 von den Zugangssteuereinheiten 11 Sendebereitschaftssignale, wenn das der jeweiligen Zugangssteuereinheit 11 zugeordnete Modul - Schaltnabe 1', Zentralprozessoreinheit 6 bzw. Slave-Prozessor 7 oder Programmiervorrichtung 4 - Daten senden will oder entsprechende Daten in der jeweiligen Zugangssteuereinheit 11 gespeichert wurden. Über ausgangsseitige Steuerleitungen 14 erteilt die Sendeberechtigungssteuerung 12 den vorgenannten Zugangssteuereinheiten 11 selektiv Sendeberechtigungen.

Durch einen für alle Zugangssteuereinheiten 11 sowie die Sendeberechtigungssteuerung 12 gemeinsamen Taktgeber 15 wird ein Gleichtakt der mit dem Taktgeber 15 kommunizierenden Einheiten gewährleistet. Im übrigen kann beispielsweise vorgesehen sein, daß ein Sendeberechtigungssignal jeweils nur für einen Takt bzw. eine vorgegebene Taktzahl wirksam bleibt und danach erneuert werden muß.

Durch entsprechende Programmierung stellt die Sendeberechtigungssteuerung 12 sicher, daß jeweils nur über eine einzige Zugangssteuereinheit 11 Daten an den Bus 10 weitergegeben werden. Somit sind kollidierende Datensendungen ausgeschlossen. Dementsprechend kann die Übertragungskapazität des Busses 10 optimal, ohne jegliche Beeinträchtigung durch kollidierende Datensendungen, genutzt werden.

Das Bus-System 9 bewirkt im Ergebnis eine Vervielfältigung des zum Bus-System 9 führenden Anschlusses der Schaltnabe 1'.

Im Hinblick auf die Erstellungskosten der gesamten Prozeßsteuerung ist vorteilhaft, wenn das Bus-System 9 in herkömmlicher elektrischer Schaltungstechnik ausgebildet ist, während für das Schaltnabensystem Lichtleitertechnik vorteilhaft sein kann. Das Schaltnabensystem dient dann zur Vernetzung über große Entfernungen, während das vergleichsweise kostengünstige Bus-System für eine Vernetzung über vergleichsweise kurze Entfernungen herangezogen wird.

Auch der Bus 8 in Fig. 1 kann entsprechend dem Bus-System 9 der Fig. 2 ausgebildet sein, lediglich mit dem Unterschied, daß der Bus 8 regelmäßig keinen direkten Anschluß an die benachbarte Schaltnabe 1 hat sondern lediglich zur internen Datenkommunikation der speicherprogrammierbaren Steuereinheit 3 dient.

Im Beispiel der Fig. 2 kann dagegen jedes an den Bus 10 angekoppeltes Systemteil einerseits mit anderen an den Bus 10 gekoppelten Systemteilen und andererseits über die Schaltnabe 1' auch direkt mit Systemteilen an anderen Schaltnaben 1 kommunizieren.

Bei kleineren Prozeßsteuerungen könnte gegebenenfalls auch das Gesamtsystem entsprechend dem Bus-System 9 der Fig. 2 ausgebildet sein, wobei dann die in Fig. 2 linke Zugangssteuereinheit 11 anstatt mit der Schaltnabe 1' mit einem Slave-Prozessor 7 od.dgl. verbunden wäre.

Abweichend von der oben beschriebenen Ausführungsform können die Lichtleiterkabel 2 ganz oder teilweise auch durch elektrische Datenleitungen ersetzt sein, soweit das elektromagnetische Umfeld nicht zu Störungen bei der Datenübertragung führen kann. Die elektrischen Datenleitungen machen elektrooptische Umsetzer an den zugeordneten Ein- und Ausgängen der Schaltnaben 1 überflüssig, so daß ein besonders kostengünstiges System möglich wird.

Bei hohem elektromagnetischen Störpotential im Umfeld und/oder langen Leitungswegen sind in der Regel die Lichtleiterkabel 2 bevorzugt.

## Patentansprüche

1. Netzwerk zur Datenübertragung mit über Schaltnaben (1) und/oder Busse (10) miteinander zum Datenaustausch verketteten Modulen (3,4,6,7,9) wobei die Schaltnaben (1) mit jeweils mehreren Anschlüssen sowie zugeordneter bzw. integrierter Speicheranordnung versehen sind und jede Schaltnabe ihre Anschlüsse jeweils paarweise unter Abtrennung von allen übrigen Anschlüssen verbindet und/oder über die Anschlüsse zugeleitete Datenpakete separiert zwischenspeichert und dem jeweils adressierten Anschluß nur dann zuleitet, wenn dieser für Datenempfang frei bzw. freischaltbar ist, und wobei die Busse (10) durch Sendeberechtigungssteuerung (12) überwachte Zugangssteuereinheiten (11) verketten, über die der jeweilige Bus Daten von den Modulen erhält,
**dadurch gekennzeichnet,**
**daß** bei einer Prozeßsteuerung mit mehreren miteinander verketteten, jeweils eine Zentralprozessoreinheit (6) sowie Slave-Prozessoren (7) umfassenden speicherprogrammierbaren Steuereinheiten (3) jeder speicherprogrammierbaren Steuereinheit eine Schaltnabe bzw. ein Bus der vorgenannten Art mit gesonderten Anschlüssen für die Slave-Prozessoren und die Zentralprozessoreinheit der jeweiligen speicherprogrammierbaren Steuereinheit zugeordnet ist und jeder Slave-Prozessor unter Umgehung seiner zugeordneten Zentralprozessoreinheit Daten mit beliebigen Modulen der gesamten Prozeßsteuerung austauschen kann.

2. Netzwerk nach Anspruch 1,
**dadurch gekennzeichnet,**
**daß** Verbindungen zwischen den Anschlüssen einer Schaltnabe (1,1') und/oder Weiterleitungen gespeicherter Daten zu einem der Anschlüsse nach vorgebbaren Prioritäten erfolgen.

3. Netzwerk nach Anspruch 1 oder 2,
**dadurch gekennzeichnet,**
**daß** an zumindest einer Schaltnabe (1) und/oder einen Bus (10) zumindest ein Anschluß als Programmiereingang (4) geschaltet ist.

4. Netzwerk nach einem der Ansprüche 1 bis 3,
**dadurch gekennzeichnet,**
**daß** die Schaltnaben (1,1') über Lichtleiterkabel (2) miteinander verkettet bzw. vernetzt sind.

5. Netzwerk nach einem der Ansprüche 1 bis 4,
**dadurch gekennzeichnet,**
**daß** die Schaltnaben (1,1') zumindest teilweise über elektrische Datenleitungen miteinander verkettet bzw. vernetzt sind.

6. Netzwerk nach einem der Ansprüche 1 bis 5,
**dadurch gekennzeichnet,**
**daß** jeder Bus (10) eine eigene Sendeberechtigungssteuerung (12) aufweist.

7. Netzwerk nach einem der Ansprüche 1 bis 6,
**dadurch gekennzeichnet,**
**daß** die Zugangssteuereinheiten (11) Sendedaten der zugeordneten Module bis zur Sendeberechtigung zwischenspeichern.

8. Netzwerk nach einem der Ansprüche 1 bis 7,
**dadurch gekennzeichnet,**
**daß** die Sendeberechtigungssteuerung (12) die Zugangssteuereinheiten (11) zyklisch und/oder nach vorgebbarer Priorität exklusiv sendeberechtigt schaltet.

9. Netzwerk nach einem der Ansprüche 1 bis 8,
**dadurch gekennzeichnet,**
**daß** eine speicherprogrammierbare Steuereinheit (3), der eine Schaltnabe (1) mit gesonderten Anschlüssen für die Slave-Prozessoren (7) und die Zentralprozessoreinheit (6) dieser Steuereinheit zugeordnet ist, einen Bus (8) aufweist, über den die Zentralprozessoreinheit sowie die Slave-Prozessoren unter Umgehung der zugeordneten Schaltnabe miteinander kommunizieren können.

## Claims

1. A network for data transmission with modules (3,9) linked for data exchange via hub switches (1) and/or busses (10), each hub switch provided with several terminals and assigned and/or integrated memory array, with each hub switch connecting its terminals in pairs while disconnecting them from all other terminals and/or temporarily storing data packets forwarded via the terminals separately and forwarding them to the respectively addressed terminal only when said terminal is available and/or can be made available for data reception, and wherein the busses link together access control units (11) which are controlled by a transmission authority control (12) and via which the respective bus receives data from the modules, **characterized in that** in a process control having several linked programmable controllers (3) respectively including a central processing unit (6) and slave processors (7), each programmable controller is assigned a hub switch and/or a bus of the kind mentioned before with separate terminals for the slave processors and central processing unit of the respective programmable controller and each slave processor can exchange data with any arbitrary module while circumventing its assigned central processing unit.

2. A network according to claim 1, **characterized in that** connections between the terminals of a hub switch (1, 1') and/or relays of stored data to one of the terminals occur according to presettable priorities.

3. A network according to claim 1 or 2, **characterized in that** at least one terminal on at least one hub switch (1) and/or one bus (10) is connected as a programming input (4).

4. A network according to one of the claims 1 to 3, **characterized in that** the hub switches (1, 1') are linked and/or networked with one another via fiber-optic cable (2).

5. A network according to one of the claims 1 to 4, **characterized in that** the hub switches (1, 1') are at least partially linked and/or networked with one another via electrical data lines.

6. A network according to one of the claims 1 to 5, **characterized in that** each bus system (10) has its own transmission authority control (12).

7. A network according to one of the claims 1 to 6, **characterized in that** the access control units (11) temporarily save transmission data of the assigned data modules until transmission authority is received.

8. A network according to one of the claims 1 to 7, **characterized in that** the transmission authority control (12) switches on the access control units (11) for exclusive transmission cyclically and/or according to a given priority.

9. A network according to one of the claims 1 to 8, **characterized in that** a programmable controller (3) to which is assigned a hub switch (1) with separate terminals for the slave processors (7) and the central processor unit (6) of said controller comprises a bus (8) via which the central processor unit and the slave processors can communicate with one another while circumventing the assigned hub switch.

## Revendications

1. Réseau pour la transmission de données, avec des modules (3,4,6,7,9) interconnectés les uns aux autres pour l'échange de données à travers des commutateurs (1) et/ou des bus (10), dans lequel les commutateurs (1) sont munis à chaque fois de plusieurs connexions ainsi que d'un agencement de mémoire ajoutée ou intégrée, et chaque commutateur relie ses connexions à chaque fois par paire en subdivision de toutes les connexions restantes et/ou mémorise de façon intermédiaire les paquets de données circulant par les connexions et ne les transmet ensuite à la connexion adressée chaque fois que lorsque celle-ci est libre pour la réception de données ou la commutation, et dans lequel les bus (10) sont reliés par des unités de commande d'accès (11) sous contrôle de commandes d'autorisation d'émission (12), selon lesquelles le bus concerné à chaque fois reçoit des données des modules, **caractérisé en ce que**, lors d'une commande de processus comprenant plusieurs unités de commande (3) programmables en mémoire interconnectées, impliquant à chaque fois une unité de processeur central (6) ainsi que des processeurs esclaves (7), un commutateur ou un bus du type précité est agencé avec des connexions distinctes pour le processeur esclave et l'unité de processeur central, pour les unités de commande programmable en mémoire, et que chaque processeur esclave peut échanger des données lors de l'évolution de l'unité de processeur central dont il dépend, selon des modules quelconques de la commande de processus dans son ensemble.

2. Réseau selon la revendication 1, **caractérisé en ce que** des liaisons entre les connexions d'un commutateur (1, 1') et/ou des conducteurs supplémentaires transmettent les données mémorisées à l'une des connexions selon des priorités pré-définies.

3. Réseau selon la revendication 1 ou 2, **caractérisé en ce que** pour au moins l'un des commutateurs (1) et/ou l'un des bus (10) au moins une connexion est agencée en entrée de programmation (4).

4. Réseau selon l'une des revendications 1 à 3, **caractérisé en ce que** les commutateurs (1, 1') sont interconnectés ou mis en réseau les uns avec les autres en utilisant des fibres optiques (2).

5. Réseau selon l'une des revendications 1 à 4, **caractérisé en ce que** les commutateurs (1, 1') sont interconnectés ou mis en réseau les uns avec les autres au moins partiellement par des lignes de transmission de données électriques.

6. Réseau selon l'une des revendications 1 à 5, **caractérisé en ce que** chaque bus (10) possède une commande d'autorisation d'émission qui lui est propre.

7. Réseau selon l'une des revendications 1 à 6, **caractérisé en ce que** les unités de commande d'accès (11) réalisent une mémorisation intermédiaire des données d'émission du module concernée jusqu'à l'autorisation d'émission.

8. Réseau selon l'une des revendications 1 à 7, **caractérisé en ce que** la commande d'autorisation (12) se commute en autorisation d'émission de façon cyclique sur les unités de commande d'accès (11) et/ou de manière exclusive selon une priorité prédéfinie.

9. Réseau selon l'une des revendications 1 à 8, **caractérisé en ce qu'**une unité de commande programmable en mémoire (3) est adjointe à un commutateur (1) avec des connexions séparées pour les processeurs esclaves (7) et pour l'unité de processeur central (6) de cette unité de commande, et comporte un bus (8), par lequel peuvent communiquer les uns avec les autres l'unité de processeur central aussi bien que les processeurs esclaves lors de l'évolution du commutateur concerné.
